# EUROPÄISCHE PATENTSCHRIFT

(11) **EP 1 053 809 B1**
(45) Veröffentlichungstag und Bekanntmachung des Hinweises auf die Patenterteilung: **16.07.2003**
(21) Anmeldenummer: 99109990.4
(22) Anmeldetag: 21.05.1999
(51) Int. Cl.: B22D 11/126, B23K 7/10

(54) **Stahlstranggiessanlage mit die Schneidschlacke sicher und wirtschaftlich granulierender und Rauchgas waschender Brennschneidmaschine**
Continuous casting installation with flame cutting machine having means for granulating the cutting slag and washing the fumes
Installation de coulée continue avec machine d'oxycoupage comprenant des moyens pour granuler le laitier et laver les gaz de fumées

(43) Veröffentlichungstag der Anmeldung: 22.11.2000
(73) Patentinhaber: Aute AG Gesellschaft für autogene Technik, 2068 Hauterive (CH)
(72) Erfinder: Lotz, Horst K., 2068 Hauterive/NE (CH)

(56) Entgegenhaltungen:
- DE-A- 2 324 572
- DE-B- 1 212 393
- DE-B- 1 288 763
- US-A- 3 486 744
- US-A- 3 526 395
- US-A- 3 743 259
- PATENT ABSTRACTS OF JAPAN vol. 009, no. 042 (M-359), 22. Februar 1985 (1985-02-22) & JP 59 183969 A (SUMITOMO KINZOKU KOGYO KK), 19. Oktober 1984 (1984-10-19)

## Beschreibung

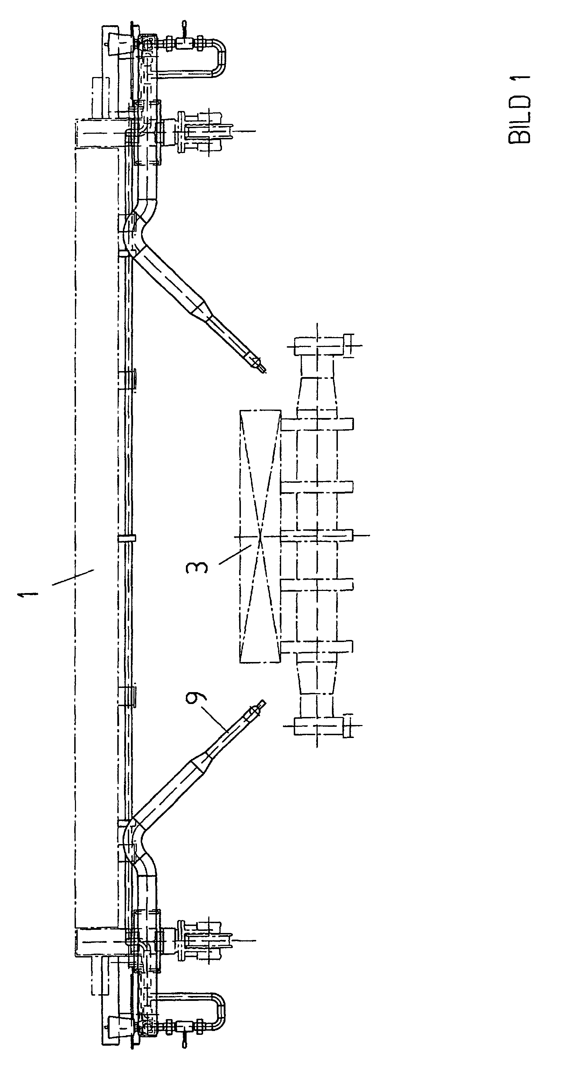

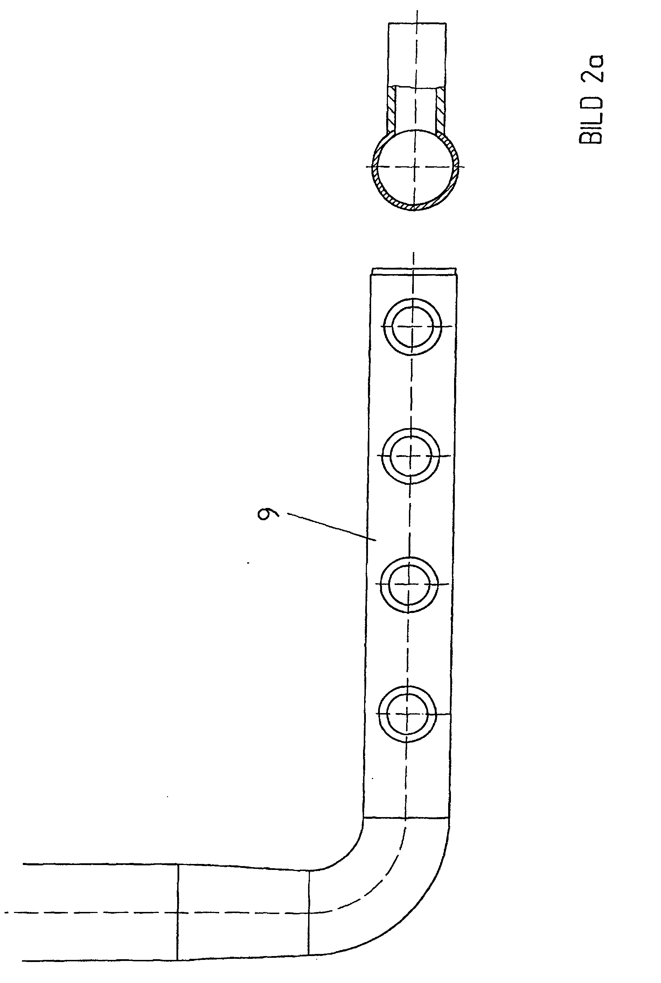

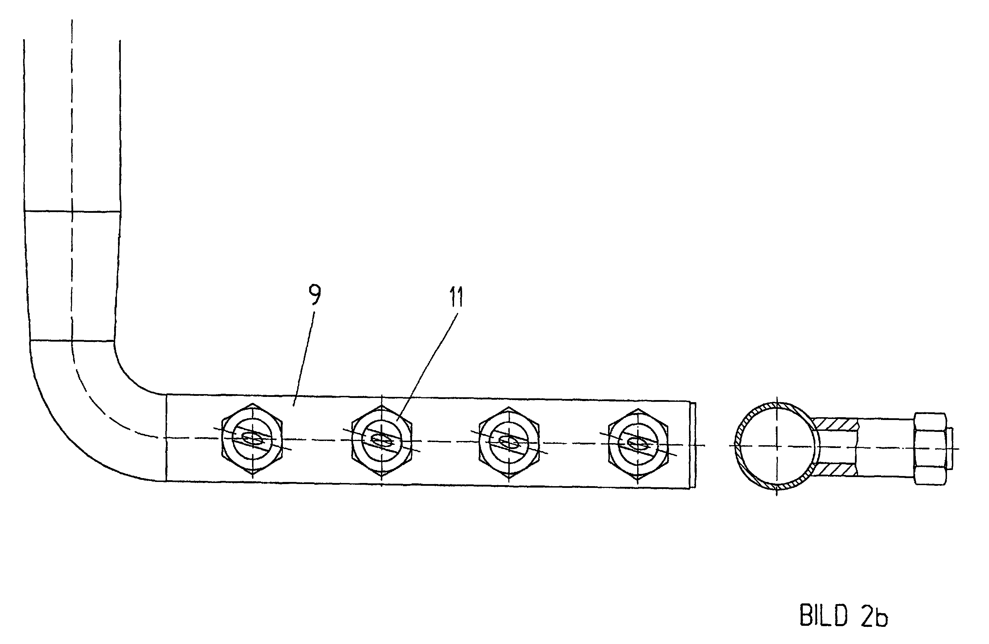

In Stahlstranggießanlagen werden die kontinuierlich vergossenen und über Rollgänge auslaufenden Stränge mit Knüppel-, Block- und Brammenformat in Rollgangslücken durch über ihnen angeordnete Sauerstoff-Brennschneidmaschinen (1) in sinnvoll weiterverarbeitbare Stücklängen unterteilt. Dabei werden von den Schneidbrennern (2) aus der beim Schneiden entstehenden Schneidfuge Schlacketeilchen vermischt mit unverbrannten Eisenteilen herausgeschleudert. Unterhalb, tiefer und neben dem Brennschnitt, durch den Synchronlauf zwischen Strang (3) und Brennschneidmaschine (1) in einem ganzen Bereich, spritzt die Schlacke auf Anlagenteile oder in Auffangbehälter oder in Abführminen mit Wasser, wobei aber die Schlacke an- oder zusammenbacken kann, was ihren Abtransport und ihr späteres Zerkleinern stark behindert und zu hohen Kosten, ja zu Betriebsunterbrechungen führt. Eine möglichst frühzeitige Granulierung, das heißt ein Abspritzen mit Wasser, ist dagegen die beste Lösung. Daher werden entweder ortsfeste Granulierwasserdüsen mit hohem Wasserbedarf oder mit der Brennschneidmaschine (1) mitlaufende Granulierdüsen nach Bild 1 mit unzuverlässig wirkenden Wasserstrahlen aus Düsen nach Bild 2a oder -schleiern aus Düsen nach Bild 2b unter dem Brennschnitt während des Schneidens eingesetzt. Entweder durchschlägt die glutflüssige Schlacke nicht ausreichend abdeckende Wasserschichten oder nicht ausreichend starke und dicht beieinander angeordnete Wasserstrahlen, was sich durch die runde Form der Wasserstrahlen, ihr sich aufweitendes und gegenseitig beeinflussendes Verhalten ergibt. Erschwerend ist dabei, daß die Schlackestrahlen nicht nur vertikal nach unten, sondern teilweise auch unkontrolliert zur Seite hinten abstrahlen oder wegspritzen. Alle bisher bekannten Ausführungen, ähnlich den in Bild 1 dargestellten von mitlaufenden Granuliereinrichtungen (4) mit Spritzdüsenanordnung und -richtung, versuchten durch hohen Wassereinsatz, hohe Wasserdrücke und viele oder im Durchmesser große Wasserstrahlen die durch das Zusammenbacken entstehende "Bärenbildung" zu verhindern. Dazu wurden die Strahlen ausreichend weit horizontal nebeneinander oder in Form eines großen Halbkreises angeordnet. Dazu wurden auch eine Reihe von Wasserstrahlen auf Lücke unter eine obere Reihe von Wasserstrahlen angeordnet.

Bei den bekannten halbwegs wirksamen Granulierungen ergibt sich bei breiteren Werkstücken wie Brammen eine sich mit der Breite mindernde Wirkung der Strahlen und beim Einsatz von Granulierdüsen von beiden Seiten her prallen die sich aufweitenden Strahlen teilweise aufeinander und werden unwirksam.

Eine vorteilhafte Einwirkung auf die beim Brennschneiden entstehenden Rauchgase durch Unterstützung einer Absaugung oder durch Auswaschen der feineren Rauchgasschwebteilchen ist auch nicht oder kaum festzustellen.

Der Gegenstand der nachstehend beschriebenen und in Anspruch 1 formulierten Erfindung ist ein Düsenstock (9) mit in Anzahl, Form und Größe so angeordneten Strahl-, Spritzdüsen und Schleierspritzdüsen (11) bestimmter Ausführung für einen bestimmten Druckbereich und einen wirtschaftlichen Wasserbedarf. Durch den kleineren Querschnitt der Wasserstrahlen-Gesamtheit ist ein leicht verschränktes, damit paralleles und wirkungsvolles Gegeneinanderspritzen zweier Düsenstücke bei breiteren Werkstücken möglich. Auch wird das entstehende und mit dem Schneidstrahl strömende Rauchgas durch Auswaschen der Schwebeteilchen erkennbar gereinigt.

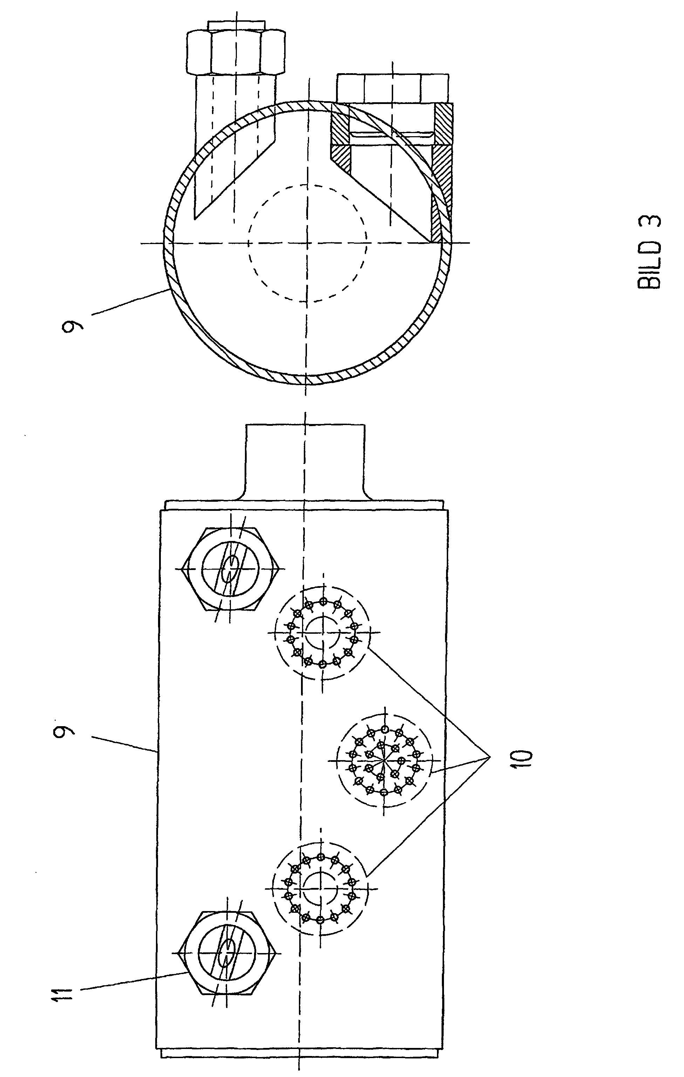

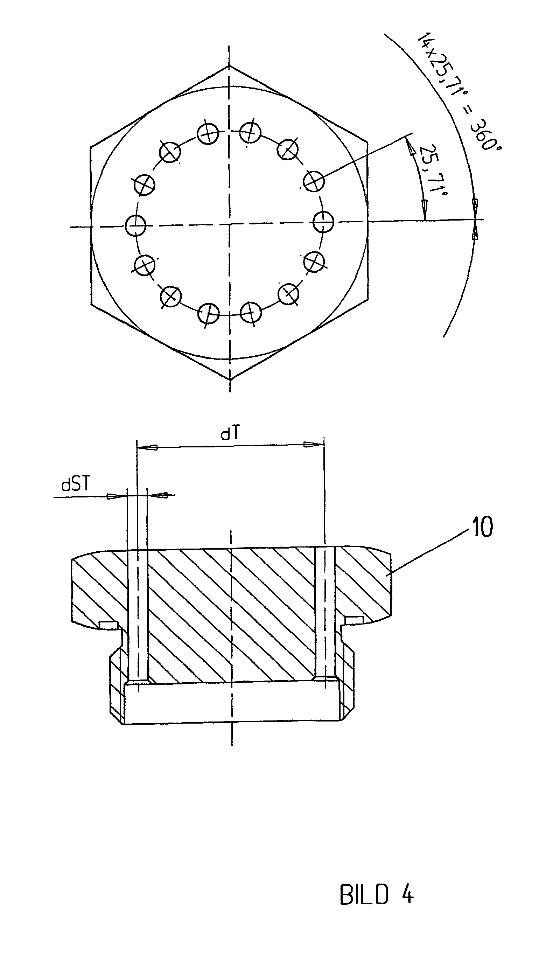

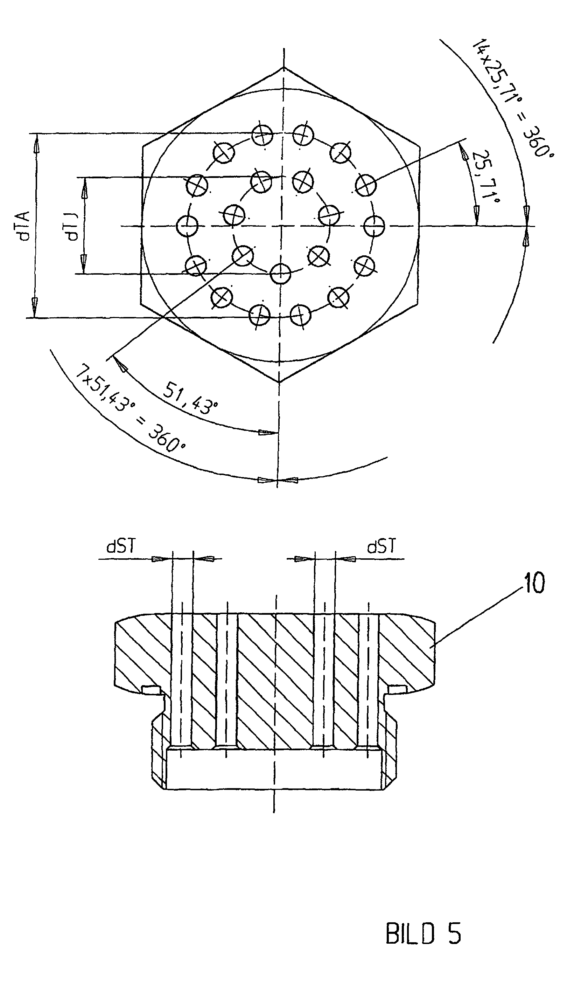

Wie in Bild 3 dargestellt, wird ein neuartiger Typ von Düsenstock (9) mit einer mehrfachen V-förmigen Anordnung von Strahlspritzdüsen (10) und Schleierspritzdüsen (11) eingesetzt, wobei 3 Strahlspritzdüsen (10) ein V bilden, von denen die untere besonders kräftig und mit mehr Wasserverbrauch spritzt als die beiden höher und seitlich angesetzten Strahlspritzdüsen (10).
Die Strahlspritzdüsen (10) sind nicht als Vollstrahldüsen mit einer Strahlbohrung sondern als Mehrstrahldüsen wie in Bild 4 gezeigt mit kleineren, ringförmig angeordneten Strahlbohrungen ausgeführt, die wie eine Hohlstrahldüse mit wenig Wasser einen großen, sich vom Düsenmund aus erweiternden Raum einnehmen und vergleichsweise weit tragen. Die untere mittlere Strahlspritzdüse (10), die Bild 5 zeigt, liegt direkt unter einem normalerweise senkrecht abstrahlenden Schlackefluß und hat 2 Ringe von Strahlbohrungen. Gegen seitlich absprühende Schlackespritzer ist über den Strahlspritzdüsen (10), das V nach oben beidseitig verlängernd, je eine Schleierspritzdüse (11) angeordnet. Durch die Art der Strahlen, durch ihre Ausweitung und ihre V-Anordnung wird die ausströmende Schlacke gezwungen, entweder eine in etwa doppelschichtige Wand aus Wasser zu durchschlagen, wenn nicht, wird sie nach unten zur Mitte hin wie von einem Dach aus Wasser abgelenkt und müßte dann den mittleren verstärkten Mehrfachstrahl aus Wasser durchschlagen, von denen jeder seine ablenkende und abschreckende Wirkung auf die Schlacke nacheinander vervielfältigend ausübt.

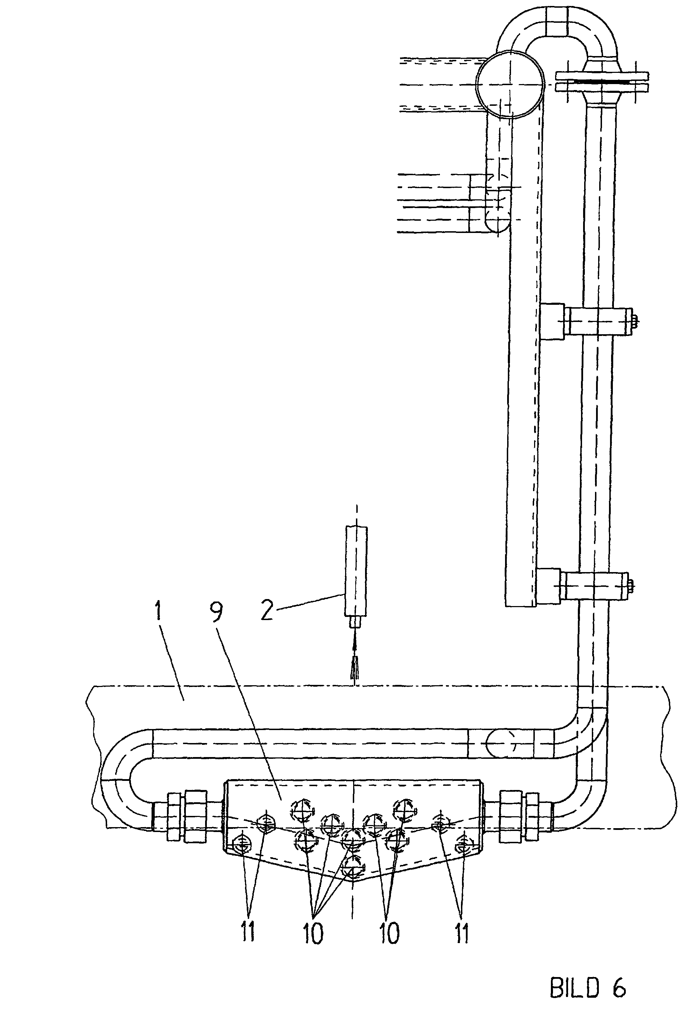

In Bild 6 ist ein Düsenstock (9) gezeigt, der ebenfalls erfindungsgemäß von einer invertierten Dach- oder V-Anordnung der Strahl-Spritzdüsen (10) und Schleier-Spritzdüsen (11) ausgeht. Wie in Bild 6 zu sehen, besteht die obere V-Reihe aus 5 Strahl-Spritzdüsen (10); die zweite V-Reihe hat keine mittlere untere Strahl-Spritzdüse (10), sondern 2 seitliche unter den äußeren Lücken der oberen V-Reihe und 2 weiter außen sitzende Schleier-Spritzdüsen (11). Darunter folgt eine dritte V-Reihe mit einer untersten Strahlspritzdüse (10) und ganz außen das gesamte Anordnungssystem begrenzenden Schleierdüsen. Bei den eingesetzten Strahl-Spritzdüsen (10) haben solche mit d_{ST} = 2,5 mm Spritzbohrungsdurchmesser, 14 Bohrungen auf einem äußeren Teilkreis von d_{T} = 23 mm Durchmesser und 7 auf einem inneren Teilkreis von 12 mm die bisher vorteilhaftesten Ergebnisse ergeben.
Bei der gegebenen Wirksamkeit, geringen Größe der beschriebenen Düsenstöcke und der geringen Aufweitungen der Spritzstrahlen ist es vorteilhaft möglich, bei auf beiden Seiten unter einem breiten Werkstück, das heißt, einer Bramme, gegenseitig anzuordnen, wenn sie nur mit einem kleinen Winkel gegen den rechten Winkel zum Werkstück eingestellt parallel spritzen.

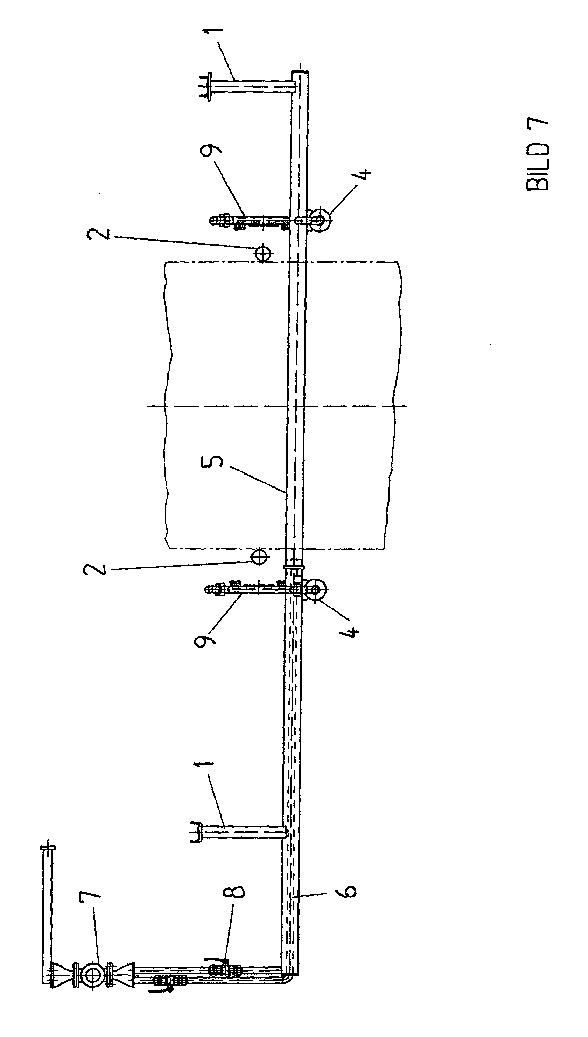

Die dafür erforderliche Versorgung mit Druckwasser auf beiden Seiten der Brennschneidmaschine (1) ist teurer und wartungsunfreundlicher als von einer Seite mit Hilfe eines vor der Brennschneidmaschine (1) und ihren Schneidbrennern (2) angeordneten Druckwasserrohres, das auf beiden Seiten Granuliereinrichtungen (4) trägt. Erfindungsgemäß läßt sich eine eigenständige Versorgung jeder Einrichtung pro Seite von einer Seite her mit eigener Absperr- (7) und Einstellvorrichtung (8) nicht nur durch ein Doppelrohr, sondern durch ein tragendes, etwa mittig geschlossenes Hauptrohr (5) für die Versorgung auf der Eingangsseite und ein diesen Teil umgehendes Hilfsrohr (6), das danach in das tragende Rohr für die Versorgung der anderen Granuliereinrichtung (4) auf der anderen Seite einmündet, vornehmen.
Diese vorteilhafte Ausführung ist in Bild 7 dargestellt.

### Legende

- 1: Brennschneidmaschine
- 2: Schneidbrenner
- 3: Strang
- 4: Granuliereinrichtung
- 5: Hauptrohr
- 6: Hilfsrohr
- 7: Absperreinrichtung
- 8: Einstelleinrichtung
- 9: Düsenstock
- 10: Strahl-Spritzdüse
- 11: Schleier-Spritzdüse

## Patentansprüche

1. Stahlstranggießanlage mit die Schneidschlacke sicher und wirtschaftlich granulierender und Rauchgas waschender Brennschneidmaschine (1), **dadurch gekennzeichnet, daß** ein oder zwei, ein- oder zweiseitig versorgte Düsenstöcke (9) mit ein- oder zweireihiger Anordnung von Strahl-Spritzdüsen (10) und ergänzenden Schleierspritzdüsen (11) in V-Form für ein waagerechtes Spritzen unterhalb der Schneidbrenner (2) und des Stranges (3) mit der Schneidlinie fluchtend an der Brennschneidmaschine (1) angebracht sind und mit 30 - 60 m³/h und 3 - 9 bar Granulierwasser beschickt werden.

2. Stahlstranggießanlage mit die Schneidschlacke sicher und wirtschaftlich granulierender und Rauchgas waschender Brennschneidmaschine (1), nach Anspruch 1, **dadurch gekennzeichnet, daß** ein Düsenstock (9) aus einem waagerecht angeordneten Rohr mit 5 V-förmig angeordneten Spritzdüsen besteht, von denen die 3 mittleren unten als Strahlspritzdüsen (10) und die beiden äußeren oben als Schleierspritzdüsen (11) ausgeführt sind und daß die Mittelabstände zwischen den Spritzdüsen zwischen 30 und 60 mm groß sind.

3. Stahlstranggießanlage mit die Schneidschlacke sicher und wirtschaftlich granulierender und Rauchgas waschender Brennschneidmaschine (1), nach einem der Ansprüche 1 und 2, **dadurch gekennzeichnet, daß** ein Düsenstock (9) aus einem waagerecht angeordneten, im Querschnitt rechteckigen Düsenkörper besteht, in den 12 V-förmig angeordnete Spritzdüsen eingeschraubt sind, die in 3 übereinander oder untereinanderliegende V-Reihen aufgeteilt sind, wobei die 8 inneren als Strahldüsen und die 4 äußeren als Schleierdüsen ausgebildet sind und die mittige Strahlspritzdüse (10) der untersten Reihe sowie die der mittleren auf Lücke sitzenden die obere V-Reihe bei harten Schlackestrahlen ergänzen und unterstützen. Die engsten Mittelabstände zwischen den Spritzdüsen betragen 30 bis 60 mm.

4. Stahlstranggießanlage mit die Schneidschlacke sicher und wirtschaftlich granulierender und Rauchgas waschender Brennschneidmaschine (1), nach einem der Ansprüche 1 bis 3, **dadurch gekennzeichnet, daß** die Düsenstöcke mit ihren Spritzdüsen mit waagerechten bis leicht nach unten zeigenden Wasserstrahlen angeordnet sind.
Bei gegeneinander gerichteten Wasserstrahlen aus zwei sich gegenüberliegenden Düsenstöcken sind beide in der Waagerechten um einen kleinen Winkel in verschiedener Richtung verdreht, bis die Spritzstrahlen etwa parallel ohne Berücksichtigung der Schleierstrahlen verlaufen.

5. Stahlstranggießanlage mit die Schneidschlacke sicher und wirtschaftlich granulierender und Rauchgas waschender Brennschneidmaschine (1), nach einem der Ansprüche 1 bis 4, **dadurch gekennzeichnet, daß** die Strahlspritzdüse (10) für einen stärksten Strahl mit 2 konzentrischen Kreisen von Spritzbohrungen, jede mit 2 bis 3 mm Durchmesser, außen mit 10 - 16 und innen mit 5 - 9 mm um eine halbe Teilung versetzt ausgeführt ist, dabei betragen die Teilkreisdurchmesser 6 - 15 mm innen und 10 - 28 mm außen.
Die anderen Strahlspritzdüsen (10) haben nur einen äußeren Kreis von 10 - 16 Spritzbohrungen mit einem Teilkreisdurchmesser von 10 - 28 mm und einen Bohrungsdurchmesser von 2 bis 3 mm.

## Claims

1. Continuous casting installation with flame cutting machine having means for granulating the cutting slag and washing the fumes (1), specified by the fact that one or two unilaterally or bilaterally supplied nozzle assemblies with jet-spraying nozzles (10), which are arranged in one or two rows, and with additional shroud-spraying nozzles (11), which are V-shaped to enable horizontal spraying below the cutting torches (2) and the strand (3), are installed to the torch cutting machine (1) in alignment with the cutting line and are supplied with 30 to 60 m³/h of granulation water at 3 to 9 bar.

2. Continuous casting installation with flame cutting machine having means for granulating the cutting slag and washing the fumes (1) - according to claim 1. - specified by the fact that one nozzle assembly (9) consists of one horizontal pipe with 5 spraying nozzles arranged in a V-shaped manner, of which the three centre nozzles are designed as jet-spraying nozzles (10) at the bottom and the two outer nozzles are designed as shroud-spraying nozzles (11) at the top. The central distances between the spraying nozzles range from 30 to 60 mm.

3. Continuous casting installation with flame cutting machine having means for granulating the cutting slag and washing the fumes (1) - according to either claim 1. or 2. - specified by the fact that one nozzle assembly (9) consists of a horizontal, in cross-section rectangular nozzle body which 12 spraying nozzles arranged in 3 V-shaped rows on top of each other or underneath each other are screwed into. The 8 inner spraying nozzles are designed as jet-spraying nozzles, the 4 outer spraying nozzles are designed as shroud-spraying nozzles. The central jet-spraying nozzle (10) in the bottom row as well as the spraying nozzle arranged "in the gap" in the centre row complement and support the top V-row in the case of hard slag jets. The narrowest central distances between the spraying nozzles range from 30 to 60 mm.

4. Continuous casting installation with flame cutting machine having means for granulating the cutting slag and washing the fumes (1) - according to one of claim 1. to 3. - specified by the fact that the nozzle assemblies with their spraying nozzles are arranged in a manner so that the water jets are pointing horizontally to slightly downwards.
When two water jets coming from two opposing nozzle assemblies are spraying towards each other, both are turned horizontally by a small angle into different directions until the jets are spraying just about parallel riot considering the shroud-spraying nozzles.

5. Continuous casting installation with flame cutting machine having means for granulating the cutting slag and washing the fumes (1) - according to one of claim 1. to 4. - specified by the fact that the jet-spraying nozzle (10) is designed with 2 concentric circles of spraying holes to produce the strongest jet possible. Each of these spraying holes has a diameter of 2 to 3 mm. The outer circle has a diameter of 10 to 16 mm, the inner circle has a diameter of 5 to 9 mm. They are arranged in a staggered manner by half a pitch. The pitch circle diameters are 6 to 15 mm at the inside and 10 to 28 mm at the outside.
The other jet-spraying nozzles (10) only have an outer circle of 10 to 16 spraying holes with a pitch circle diameter of 10 to 28 mm and a hole diameter of 2 to 3 mm.

## Revendications

1. Installation de coulée continue avec machine d'oxycoupage (1) comprenant des moyens pour granuler le laitier et laver les gaz de fumées, **caractérisée en ce que** la machine d'oxycoupage (1) est équipée d'une ou deux cannes à gicleurs disposées d'un seul ou des deux côtés et servant de réception à une ou deux rangées en V de gicleurs à jet cylindrique (10) complétés par des gicleurs à jet plat (11), le tout produisant un jet horizontal dans l'alignement de la ligne de coupe en dessous des chalumeaux d'oxycoupage (2) et de la coulée (3), et que ces cannes sont alimentées en eau de granulation selon un débit de 30 à 60 m³/h et sous une pression de 3 à 9 bar.

2. Installation de coulée continue avec machine d'oxycoupage (1) comprenant des moyens pour granuler le laitier et laver les gaz de fumées, selon la revendication 1, **caractérisée en ce qu'**une canne à gicleurs (9) se compose d'un tuyau horizontal avec 5 gicleurs disposés en V, les trois gicleurs centraux inférieurs étant des gicleurs à jet cylindrique (10) et les deux gicleurs externes des gicleurs à jet plat (11), et que l'entraxe entre deux gicleurs s'élève à 30 - 60 mm.

3. Installation de coulée continue avec machine d'oxycoupage (1) comprenant des moyens pour granuler le laitier et laver les gaz de fumées, selon l'une des revendications 1 et 2, **caractérisée en ce qu'**une canne à gicleurs (9) se compose d'un corps à gicleurs horizontal et à section rectangulaire avec 12 gicleurs disposés selon 3 rangées superposées, où les 8 gicleurs intérieurs sont des gicleurs à jet cylindrique (10) et les 4 gicleurs extérieurs des gicleurs à jet plat (11) et où les gicleurs à jet cylindrique (10) du centre de la rangée inférieure de même que ceux de la rangée centrale disposés dans les interstices laissés libres complètent et renforcent ceux de la rangée supérieure dans le cas de jets de scories plus durs. L'entraxe minimal entre deux gicleurs est compris entre 30 et 60 mm.

4. Installation de coulée continue avec machine d'oxycoupage (1) comprenant des moyens pour granuler le laitier et laver les gaz de fumées, selon l'une des revendications 1 à 3, **caractérisée en ce que** les cannes à gicleurs (9) sont disposées de telle sorte que les gicleurs produisent un jet d'eau horizontal ou légèrement orienté vers le bas.
Dans le cas de jets d'eau opposés provenant de cannes disposées en regard l'une de l'autre, les cannes sont orientées selon un angle faible de façon à ce que les jets cylindriques (sans tenir compte des jets plats) soient mésalignés l'un de l'autre.

5. Installation de coulée continue avec machine d'oxycoupage (1) comprenant des moyens pour granuler le laitier et laver les gaz de fumées, selon l'une des revendications 1 à 4, **caractérisée en ce que** le gicleur (10) dont le jet cylindrique est le plus dur est pourvu de trous d'éjection, chacun d'un diamètre de 2 à 3 mm, disposés selon de deux cercles concentriques d'un diamètre intérieur compris entre 6 et 15 mm et d'un diamètre extérieur entre 10 et 28 mm, les trous extérieurs étant au nombre de 10 à 16, ceux intérieurs de 5 à 9 et décalés d'une demi-division par rapport aux premiers.
Les autres gicleurs à jet cylindriques (10) ont leurs trous d'éjèction, d'un diamètre de 2 à 3 mm et au nombre de 10 à 16, disposés selon un cercle d'un diamètre compris entre 10 et 28 mm.
